Europäisches Patentamt

European Patent Office

Office européen des brevets

(11) Publication number: **0 206 326**
**B1**

(12) **EUROPEAN PATENT SPECIFICATION**

(45) Date of publication of patent specification: **20.06.90**

(51) Int. Cl.⁵: **G 01 P 5/00, G 01 S 7/62**

(21) Application number: **86108624.7**

(22) Date of filing: **25.06.86**

(54) Flow map apparatus.

(30) Priority: **25.06.85 US 748531**

(43) Date of publication of application:
**30.12.86 Bulletin 86/52**

(45) Publication of the grant of the patent:
**20.06.90 Bulletin 90/25**

(84) Designated Contracting States:
**DE FR GB**

(56) References cited:
**EP-A-0 100 094**
**US-A-4 205 687**

**ACOUSTICAL IMAGING, 11th September 1984,
vol. 13, pages 447-460, Plenum Press, New York,
US; K. KASAI et al.: "Real-time two-dimensional
doppler flow mapping using auto-correlation"**

(73) Proprietor: **Hewlett-Packard Company
Mail Stop 20 B-O 3000 Hanover Street
Palo Alto California 94304 (US)**

(72) Inventor: **Lipschutz, David
9 Sunny Knoll Avenue
Lexington Massachusetts 02173 (US)**

(74) Representative: **Liesegang, Roland, Dr.-Ing.
FORRESTER & BOEHMERT Widenmayerstrasse
4 Postfach 22 01 37
D-8000 München 22 (DE)**

Courier Press, Leamington Spa, England.

## Description

This invention refers to an ultrasonic apparatus according to the first part of claim 1 (EP—A—0 100 094).

Two dimensional images of structure of portions of the human body such as the heart are presently formed from the reflections of ultrasonic waves that are transmitted into the body.

It is also possible to determine the velocity with which the blood is flowing toward and away from points in the image by using a pulsed Doppler system. An image of the velocity distribution thus attained can be superimposed on the structural image if desired.

The velocity distribution can be represented by shades of grey, but this has not been very meaningful. Furthermore, it is sometimes difficult to distinguish the velocity image from the structural image. Therefore, it has been proposed that one set of colors be respectively and arbitrarily assigned to each of a plurality of velocity ranges for blood moving in one direction and that a different set of colors be respectively and arbitrarily assigned to each of a plurality of velocity ranges for blood moving in the opposite direction. A serious disadvanage of this method of forming a flow map is that there is no natural association of any particular color with a given velocity. It has therefore been proposed that a red color of fixed hue be used to represent flow in one direction and that a blue color of fixed hue be used to represent flow in the other direction. Increasing velocities are represented by increasing the intensity of the appropriate color, but without a change in hue.

The problem with this type of display is that it is very difficult to perceive the difference between the various velocities because all the reds tend to look the same and all the blues tend to look the same. This is especially true for the lower levels of velocity.

In the known apparatus (EP—A—0 100 094) deviation or variance of velocity of fluid flow is represented by a change in hue, whereas increased velocities are represented by increased intensity of the respective colour.

The problem underlying the present invention is to make the differences in velocity more apparent. This problem is accomplished by the features of claim 1.

With the apparatus of the invention both intensity and hue are changed as the velocity changes. This is done in such a way that there is a natural rather than an arbitrary change in hue as the velocity changes and that the colors representing velocities in one direction are distinct from the colors representing the velocities in the other direction.

By way of example, satisfactory results have been attained by representing velocities below an arbitrarily selected threhold by black, velocities of flow toward the observer that just exceed the threshold by a fairly bright blue, and velocities of flow away from the observer that just exceed the threshold by a fairly bright red. Thus the low velocities are observable. As the velocity of the flow toward the observer increases beyond the threshold, the intensity of the blue light is increased and an increasing amount of green light is added to it so as to further increase the intensity of the mixture. A desired change in hue in a path in the color triangle from blue toward green is attained by increasing the ratio of the green-to-blue light as the velocity increases. Similarly, as the velocity of the flow away from the observer increases beyond the threshold, the intensity of the red light is increased and an increasing amount of green light is added to it so as to further increase the intensity of the mixture. A desired change in hue in a path in the color triangle from red to green is attained by increasing the ratio of the green-to-red light as the velocity increases.

The color selected for the velocities just above the threshold may be located anywhere in the color triangle and the change in hues may be along any paths for these colors. Preferably, however, the paths do not intersect. In any event, a change in hue along a given path is a natural progression that is easily associated with a change in velocity in the mind of the observer, especially if the progression in hue is accompanied by an increase in intensity.

Other features and advantages will appear from the accompanying drawings and from the following description thereto.

Figure 1 is a bock diagram of a system for forming a flow map in color in accordance with this invention,

Figure 2 is a graph illustrating changes in intensity of blue and green light as a function of the velocity of flow toward an observer,

Figure 3 is a graph illustrating changes in intensity of red and green light as a function of the velocity of flow away from the observer, and

Figure 4 shows the well known color triangle.

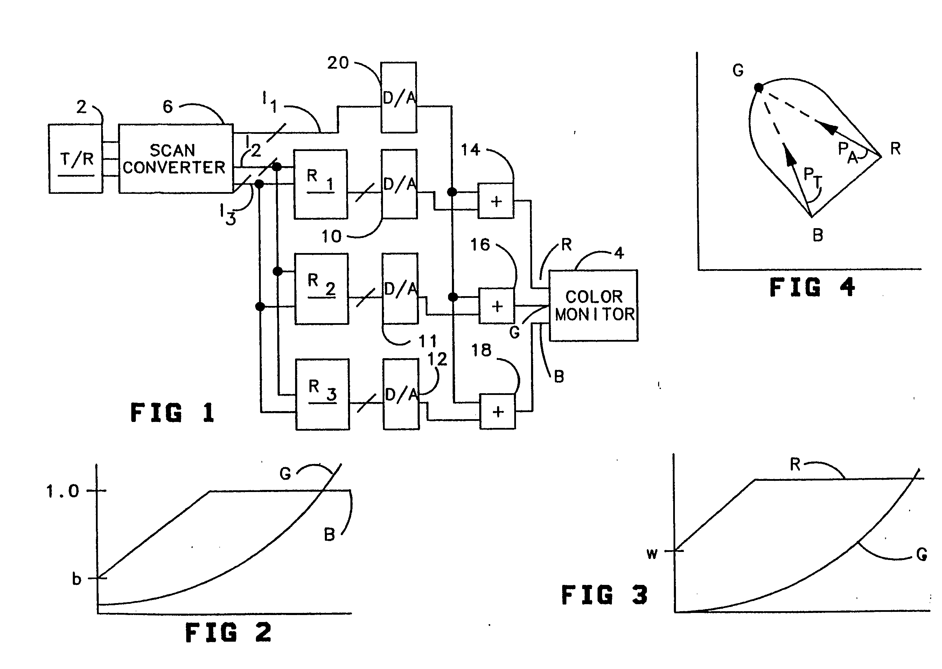

In Figure 1, an ultrasonic transceiver 2 transmits ultrasonic energy into a body under examination and converts the reflections thereof into digital signals representing a two-dimensional image of structure and into digital signals representing the magnitude and direction of the velocity of any movement occurring in the image.

Inasmuch as the data may be attained along radial lines, as when T/R uses a phased array, and is to be reproduced on a monitor 4 having a raster of parallel lines, the signals are applied to a scan converter 6 which outputs a digitized video signal for the two-dimensional image on a line $l_1$; a signal indicating the direction of flow at each point in the image area on a line $l_2$; and a signal indicating the magnitude of the flow on a line $l_3$. The signals on lines $l_2$ and $l_3$ are applied to three ROMs $R_1$, $R_2$ and $R_3$ that respectively convert the direction and magnitude information into digital signals representing the amplitudes of red, green and blue that are to be displayed on the monitor 4. The outputs of the ROMs $R_1$, $R_2$ and $R_3$ are respectively applied to D/A converters 10, 11 and 12 and their outputs are respectively connected to inputs of adders 14, 16 and 18. The signals for the two-dimensional image that are on $I_1$ are applied via a D/A converter 20 to inputs of the adders 14, 16 and 18, and their outputs are applied to inputs R, G and B of the color monitor 4 that respectively control the amounts of red, green and blue light which it produces.

Whereas the ROMs $R_1$, $R_2$ and $R_3$ can be programmed so as to produce any combination of color and intensity that is desired for the various amounts and directions of flow, the equations set forth below define the type of combination in general terms that has been found to be meaningful.

For velocity flow and flows below a given threshold value,

$$R=B=G=0.$$

For flows greater than the threshold value that are on a direction toward the observer,

$R=0,$
$B=CLIP (a \cdot F+b),$
$G=CLIP (c \cdot F+d \cdot F^2+e \cdot F^3)+q.$

For flows greater than the threshold value that are in a direction away from the observer,

$R=CLIP (v \cdot F+w),$
$B=0,$
$G=CLIP (x \cdot F+y \cdot F^2+z \cdot F^3)+p.$

The function CLIP of $\alpha$ is defined as follows:

$$\left\{ \begin{array}{l} \alpha \text{ if } \alpha>1 \\ 1 \text{ if } \alpha \geq 1 \end{array} \right\}$$

Because of the squared and cubed terms the amount of green that is added to blue for flows toward the observer and to red for flows away from the observer increase non-linearly with the rate of flow, whereas the red and blue increase linearly. The resulting change in the ratio of the colors changes the hue, and the fact that the two colors are increasing in intensity also increases the brightness.

In the CIE color triangle of Figure 4, the primary colors employed by the monitor 4 as indicated at points R, B and G: Above the threshold value for flow coming toward the observer, the hue goes from blue toward green along a path $P_T$; and above the threshold value for flow going away from the observer, the hue goes from red toward green along a path $P_A$. Figure 2 generally illustrates the changes in the intensities of blue and green light when the flow is toward the observer, and Figure 3 generally illustrates the changes in the intensities of red and green light where the flow is away from the observer.

Although various values may be used for the constants used in the above equations, the following have been found to produce very good results. Note that everything is normalized.

| | |
|---|---|
| a=0.98 | v=0.94 |
| b=0.35 | w=0.47 |
| c=0 | x=0 |
| d=0.51 | y=0.37 |
| e=0.47 | z=0.51 |
| q=0 | p=0 |

In the particular embodiment thus far described, the threshold colors have been two primary colors and the changes in hue resulting from an increase in flow has been toward the third primary color as illustrated by the paths $P_t$ and $P_A$, but it is within the purview of the invention to start with any color within the color triangle formed by the primaries R, B and G and proceed along a path that may be curved or straight to any other color in the triangle by respectively changing the intensity of two or more primary colors in one direction so as to change the hue and intensity of the resultant light with changes in the flow rate.

Note that all the primary colors are increased and decreased in intensity by the two dimensioned image signal so as to control the brightness of the two dimensional image so as to superimpose it on the color flow map.

**Claims**

1. Ultrasonic apparatus for forming an image of a planar section of a body under examination in which the speed of flow of fluid at different points in the plane is represented in color, wherein the speed of fluid flow in one direction is represented by a first color and the speed of fluid flow in the opposite direction is represented by a second color, characterized in that a change in intensity and hue from said first color toward a third color is effected to indicate an increase in the speed of flow in said one direction, and that the change in intensity and hue from said second color toward said third color is effected to indicate an increase in the speed of flow in said opposite direction.

2. Ultrasonic apparatus according to claim 1, characterized in that the changes in hue follow different paths in the color triangle.

3. Ultrasonic apparatus according to claim 2, characterized in that said paths are mutually exclusive.

4. Ultrasonic apparatus according to claim 2 or 3, characterized in that one path runs from red toward green and the other path runs from blue toward green.

5. Ultrasonic apparatus according to one of claim 1 to 4, characterized in that the respective intensities increase with the corresponding speed of flow.

6. Ultrasonic apparatus according to one of claims 1 to 5, characterized in that the intensity increases in a non-linear fashion as the speed of flow increases.

7. Ultrasonic apparatus according to claims 1 to 6, in which the colors are produced by the addition of three primary colors red (R), green (G) and blue (B) in accordance with the following expressions, wherein a—e, p, q, v, w, x, z are constants, when the velocity of flow is below a given minimum,

$$R=B=G=0;$$

when the velocity F of flow is in one direction,

$$R=0$$
$$B=CLIP\ (a \cdot F+b),$$
$$G=CLIP\ (c \cdot F+d<F^2+e \cdot F^3)+q;$$

and when the velocity F of flow is in the opposite direction,

$$R=CLIP\ (v \cdot F+w),$$
$$B=0,$$
$$G=CLIP\ (x \cdot F+y \cdot F^2+z \cdot F^3)+p,$$

wherein the function CLIP of $\alpha$ is defined as follows:

$$CLIP(\alpha)=\alpha\ if\ \alpha<1$$
$$CLIP(\alpha)=1\ if\ \alpha\geq1$$

8. Ultrasonic apparatus according to claim 7, wherein a=0.98, b=0.35, c=0, d=0.51, e=0.47, v=0.94, w=0.47, x=0, y=0.37, z=0.51, q=0 and p=0.

**Patentansprüche**

1. Ultraschallvorrichtung zum Abbilden einer Querschnittsebene eines in Untersuchung befindlichen Körpers, wobei die Strömungsgeschwindigkeit eines Fluids an unterschiedlichen Punkten der Ebene in Farbe dargestellt wird, indem die Geschwindigkeit der Fluidströmung in der einen Richtung durch eine erste Farbe und die Geschwindigkeit der Fluidströmung in der entgegengesetzten Richtung durch eine zweite Farbe repräsentiert werden, dadurch gekennzeichnet, daß eine Veränderung von Intensität und Tönung der ersten Farbe zu einer dritten Farbe bewirkt wird, um einen Anstieg der Strömungsgeschwindigkeit in der einen Richtung anzuzeigen, und daß eine Veränderung von Intensität und Tönung der zweiten Farbe zu der dritten Farbe bewirkt wird, um einen Anstieg der Strömungsgeschwindigkeit in der entgegengesetzten Richtung anzuzeigen.

2. Ultraschallvorrichtung nach Anspruch 1, dadurch gekennzeichnet, daß die Änderungen der Tönungen im Farbdreieck unterschiedlichen Pfaden folgen.

3. Ultraschallvorrichtung nach Anspruch 1, dadurch gekennzeichnet, daß die Pfade sich gegenseitig ausschließen.

4. Ultraschallvorrichtung nach Anspruch 2 oder 3, dadurch gekennzeichnet, daß der eine Pfad von rot nach grün und der andere Pfad von blau nach grün führt.

5. Ultraschallvorrichtung nach einem der Ansprüche 1 bis 4, dadurch gekennzeichnet, daß die entsprechenden Intensitäten mit der zugehörigen Strömungsgeschwindigkeit zunehmen.

6. Ultraschallvorrichtung nach einem der Ansprüche 1 bis 5, dadurch gekennzeichnet, daß die Intensität nichtlinear mit dem Anstieg der Strömungsgeschwindigkeit zunimmt.

7. Ultraschallvorrichtung nach einem der Ansprüche 1 bis 6, bei der die Farben durch Hinzufügen der drei Grundfarben Rot (R), Grün (G) und Blau (B) gemäß der folgenden Beziehungen erzeugt werden, worin a—e, p, q, v, w, x, z Konstanten sind, sofern die Geschwindigkeit F der Strömung unterhalb eines vorgegebenen Minimums liegt,

$$R=B=G=0;$$

sofern die Geschwindigkeit F der Strömung in die eine Richtung weist,

$$R=0$$
$$B=CLIP\ (a \cdot F+b),$$
$$G=CLIP\ (c \cdot F+d<F^2+e \cdot F^3)+q;$$

und sofern die Geschwindigkeit F der Strömung in die entgegengesetzte Richtung weist,

$$R=CLIP\ (v \cdot F+w),$$
$$B=0,$$
$$G=CLIP\ (x \cdot F+y \cdot F^2+z \cdot F^3)+p,$$

worin die Funktion CLIP von $\alpha$ wie folgt definiert ist:

$$CLIP\ (\alpha)=\alpha\ if\ \alpha<1$$
$$CLIP\ (\alpha)=1\ if\ \alpha\geq1$$

8. Ultraschallvorrichtung nach Anspruch 7, worin a=0,98, b=0,35, c=0, d=0,51, e=0,47, v=0,94, w=0,47, x=0, y=0,37, z=0,51, q=0, p=0 ist.

**Revendications**

1. Un appareil à ultrasons pour former une image d'une section plane d'un corps à examiner, dans lequel on représente en couleurs la vitesse d'écoulement du fluide en différentes points du plan, la vitesse d'écoulement du fluide dans un sens étant représentée par une première couleur et la vitesse d'écoulement du fluide dans le sens contraire étant représentée par une seconde couleur,

caractérisé en ce que l'on effectue une modification d'intensité et de teinte de ladite première couleur vers une troisième couleur afin d'indiquer un accroissement de la vitesse d'écoulement dans ledit premier sens, et en ce que l'on effectue la modification d'intensité et de teinte de ladite second couleur vers ladite troisième couleur de manière à indiquer un accroissement de la vitesse d'écoulement dans ledit sens contraire.

2. Le dispositif à ultrasons de la revendication 1, caractérisé en ce que les modifications de teinte suivent des trajets différents sur le triangle colorimétrique.

3. Le dispositif à ultrasons de la revendication 2, caractérisé en ce que lesdits trajets sont mutuellement exclusifs.

4. Le dispositif à ultrasons de l'une des revendications 2 ou 3, caractérisé en ce que l'un des trajets va du rouge au vert et l'autre trajet, du bleu au vert.

5. Le dispositif à ultrasons de l'une des revendications 1 à 4, caractérisé en ce que les intensités respectives augmentent avec la vitesse d'écoulement correspondante.

6. Le dispositif à ultrasons de l'une des revendications 1 à 5, caractérisé en ce que l'intensité augmente de manière linéaire au fur et à mesure de l'augmentation de la vitesse d'écoulement.

7. Le dispositif à ultrasons de l'une des revendications 1 à 6, dans lequel les couleurs sont produites par addition des trois couleurs primaires rouge (R), vert (V) et bleu (B) conformément aux expressions suivantes, dans lesquelles $a-e$, $p$, $q$, $v$, $w$, $x$ et $z$ sont des constantes:

—lorsque la vitesse d'écoulement F est au-dessous d'un minimum donné;

$$=B=V=0;$$

—lorsque la vitesse d'écoulement F est dans l'un des sens;

$$R=0$$
$$B=CLIP\ (a \cdot F+b)$$
$$V=CLIP\ (c \cdot F+d \cdot F^2+e \cdot F^3)+q;\ et$$

—lorsque la vitesse d'écoulement F est dans le sens opposé;

$$R=CLIP\ (v \cdot F+w)$$
$$B=0$$
$$V=CLIP\ (x \cdot F+y \cdot F^2+z \cdot F^3)+p,$$

la fonction CLIP $(\alpha)$ étant définie par:

$$CLIP\ (\alpha)=\alpha\ si\ \alpha<1;\ et$$
$$CLIP\ (\alpha)=1\ si\ \alpha\geq1.$$

8. Le dispositif à ultrasons de la revendication 7, dans lequel $a=0,98$, $b=0,35$, $c=0$, $d=0,51$, $e=0,47$, $v=0,94$, $w=0,47$, $x=0$, $y=0,37$, $z=0,51$, $q=0$ et $p=0$.

FIG 1

FIG 2

FIG 3

FIG 4